# DEMANDE DE BREVET EUROPEEN

(11) **EP 4 660 004 A1**
(43) Date de publication de la demande: **10.12.2025**
(21) Numéro de dépôt: 25171013.3
(22) Date de dépôt: 16.04.2025
(51) Int. Cl.: B60N 2/28, B62D 25/20

(54) **PLANCHER RENFORCÉ POUR STRUCTURE DE VÉHICULE AUTOMOBILE**

(30) Priorité: 05.06.2024 FR 2405889
(71) Demandeur: Stellantis Auto SAS, 78300 Poissy (FR)
(72) Inventeur: BERTH, STEPHANE, 92320 CHATILLON (FR); LAM QUANG VINH, GUILLAUME, 93190 LIVRY GARGAN (FR); ARNAUD, LAURENT, 70110 SENARGENT MIGNAFANS (FR); GUILBAUT, MARC, 94140 ALFORTVILLE (FR)
(74) Mandataire: BCIP

(57) **Abrégé**

L'invention a pour objet une structure (12) de véhicule automobile. La structure (12) comprend un habitacle passager ; une tôle de plancher (16) sous l'habitacle passager, ladite tôle de plancher comprend un premier bossage de rigidification (36) s'étendant longitudinalement ; une traverse, telle une planche à talon, avec une bride de fixation (52) longitudinalement au niveau du premier bossage de rigidification ; un raidisseur longitudinal le long du premier bossage de rigidification (36). Le raidisseur longitudinal comprend un tronçon avant (40) fixé à la tôle de plancher (16) et comprenant au moins un bossage avant (42) ; un tronçon arrière (44) avec un bossage arrière (46) qui est différent du au moins un bossage avant (42), et qui s'étend le long du premier bossage de rigidification et de la bride de fixation (52). Le raidisseur longitudinal est à l'aplomb d'une jambe de force de siège enfant.

## Description

L'invention traite du renfort d'une structure de véhicule automobile. L'invention concerne une adaptation d'un plancher de véhicule automobile à une jambe de force de siège enfant. L'invention a pour objet une structure de véhicule automobile. L'invention a également pour objet un véhicule automobile.

Un véhicule automobile présente une structure mécanique. Cette structure relie les différents organes du véhicule, et supporte les équipements de finition. Ainsi, elle est reliée aux suspensions comme à la direction, et supporte le moteur ainsi que la batterie électrique dans le cas d'un véhicule à entraînement électrique. Par ailleurs, elle forme un support de fixation pour les sièges installés dans l'habitacle passager.

La structure forme une caisse, une coque, s'étendant généralement sur toute la longueur et toute la largeur du véhicule. Elle comporte un assemblage de tôles embouties puis soudées les unes aux autres. Certaines tôles forment des pla-teurs matérialisant un plancher ou une surface de carrosserie, tandis que d'autres tôles sont conformées afin de matérialiser des profilés. Ces profilés sont alors employés en tant que longerons, traverses ou poteaux. Un autre type de tôle permet de réaliser des renforts apportant un gain de rigidité dans une zone prédéfinie. Ces renforts répondent à des contraintes mécaniques spécifiques, par exemple à des chargements localisés.

Par ailleurs, la structure doit répondre dans son ensemble à des critères de sécurité. En cas de collision, elle doit à la fois absorber l'énergie du choc tout en favorisant une cinématique de déformation évitant la génération de points durs, et le risque d'intrusion dans l'habitacle.

Le document CN115257964A présente un véhicule automobile comprenant un ensemble de plancher avant renforcé. Un premier ensemble de renfort comprend deux poutres de renfort qui sont reliées en quinconce. L'ensemble traverse de siège comprend une traverse avant et une traverse arrière ; qui sont disposées de manière amovible sur le panneau de plancher. Les traverses avant et arrière sont disposées en parallèle à intervalles dans le sens de la longueur du panneau de plancher. Au moins une poutre de renfort est reliée à la traverse arrière de siège. Cet ensemble de plancher avant améliore la sécurité du véhicule. La conduction des vibrations est réduite, la modalité est garantie et le confort des passagers est amélioré.

Le document CN218505994U présente une structure de plancher arrière de carrosserie de véhicule et un véhicule. La structure de plancher est constituée d'une caisse de plancher arrière, d'un cadre de montage de bloc de batterie et d'un cadre de renforcement de plancher arrière. La caisse de plancher arrière est pourvue d'une zone de montage pour placer un bloc de batterie. Le cadre de montage de bloc de batterie est disposé de manière fixe au-dessus du corps de plancher arrière et est pourvu d'un point de fixation de bloc de batterie. Le cadre de renforcement de plancher arrière est disposé de manière fixe au-dessous du corps de plancher arrière, et les extrémités avant et les extrémités arrière de la poutre longitudinale centrale de plancher arrière, de la poutre longitudinale gauche de plancher arrière et de la poutre longitudinale droite de plancher arrière sont reliées à l'avant de plancher arrière. Le cadre de montage du bloc de batterie améliore d'une part la rigidité du corps de plancher arrière et fournit d'autre part un support fiable au bloc de batterie en tant que point de fixation du bloc de batterie. Le risque de combustion provoquée par l'extrusion du bloc-batterie baisse.

Afin de bénéficier d'une économie d'échelle sur une gamme de modèles de véhicule automobile, il est intéressant d'utiliser une même tôle de plancher sur différents modèles. Or certains modèles présentent des empattements différents. Dès lors, un modèle de raidisseur ne peut être employé que sur un unique modèle de véhicule automobile. Il existe donc un besoin de modularité concernant les raidisseurs de plancher.

L'invention a pour objectif de répondre à au moins un des problèmes ou inconvénients rencontrés dans l'art antérieur. En particulier, l'invention a pour objectif de proposer une structure de véhicule automobile modulaire. L'invention a également pour objectif d' optimiser la rigidité, la modularité, l'assemblage et la sécurité propre à un plancher de véhicule automobile.

Selon un premier aspect, l'invention propose une structure de véhicule automobile, la structure comprenant un habitacle passager ; une tôle de plancher sous l'habitacle passager, ladite tôle de plancher comprend un premier bossage de rigidification s'étendant longitudinalement ; une traverse avec une bride de fixation longitudinalement au niveau du premier bossage de rigidification ; un raidisseur longitudinal le long du premier bossage de rigidification ; **remarquable en ce que** le raidisseur longitudinal comprend un tronçon avant fixé à la tôle de plancher et comprenant au moins un bossage avant ; un tronçon arrière avec un bossage arrière qui est différent du au moins un bossage avant, et qui s'étend le long du premier bossage de rigidification et de la bride de fixation.

La configuration du raidisseur longitudinal lui permet de renforcer le premier bossage de rigidification à l'endroit de la bride de fixation ; grâce à un bossage dédié. Ainsi, l'invention apporte une possibilité de modularité. Ce résultat est atteint tout en optimisant la rigidité et la facilité de montage.

Préférentiellement, le premier bossage de rigidification comprend une extrémité avant le long du bossage arrière.

Préférentiellement, le tronçon arrière est verticalement entre la bride de fixation et la tôle de plancher.

Préférentiellement, le au moins un bossage avant est plus haut que le bossage arrière.

Préférentiellement, le bossage arrière est plus large que le premier bossage de rigidification.

Préférentiellement, le bossage arrière est plus large que chaque bossage avant.

Préférentiellement, le bossage avant comprend un sommet avant, le bossage arrière comprend un sommet arrière sous le sommet avant.

Préférentiellement, le sommet arrière est fixé à la bride de fixation.

Préférentiellement, la tôle de plancher comprend deux deuxièmes bossages de rigidification, une zone plane entre les deuxièmes bossages et en avant du premier bossage de rigidification, le tronçon avant étant fixé à ladite zone plane ; préférentiellement, le premier bossage de rigidification comprend une première hauteur, les deuxièmes bossages de rigidification comprennent une deuxième hauteur supérieure à la première hauteur.

Préférentiellement, le raidisseur longitudinal comprend une rampe de jonction qui relie longitudinalement le au moins un bossage avant au bossage arrière et qui est inclinée par rapport à la tôle de plancher.

Préférentiellement, le au moins un bossage avant comprend un premier volume interne, et le bossage arrière comprend un deuxième volume interne qui est supérieur au premier volume interne.

Préférentiellement, le au moins un bossage avant comprend deux bossages avant, et le raidisseur longitudinal comprend une gorge longitudinale entre les deux bossages avant.

Préférentiellement, le bossage arrière, le premier bossage de rigidification et la bride de fixation forment un empilement.

Préférentiellement, l'empilement est fixé par un point de soudure trois épaisseurs.

Préférentiellement, le tronçon arrière comprend une moitié avant et une moitié arrière, la bride de fixation de la traverse est fixée à la moitié arrière ou à la moitié avant.

Préférentiellement, le raidisseur longitudinal est plus épais que la tôle de plancher.

Préférentiellement, le premier bossage de rigidification est continu.

Préférentiellement, l'extrémité avant est dans le bossage arrière.

Préférentiellement, le au moins un bossage avant est plus long que le bossage arrière.

Préférentiellement, le tronçon avant est fixé à la zone plane.

Préférentiellement, le tronçon avant est en avant de l'extrémité avant.

Préférentiellement, le tronçon arrière est fixé à la bride de fixation.

Préférentiellement, le tronçon arrière comprend une longueur supérieure ou égale à 5 cm.

Préférentiellement, le tronçon arrière comprend une longueur supérieure ou égale à 12 cm.

Préférentiellement, le tronçon arrière est verticalement en regard du premier bossage de rigidification.

Préférentiellement, le tronçon arrière est parallèle au premier bossage de rigidification.

Préférentiellement, le tronçon arrière est aligné sur le premier bossage de rigidification.

Préférentiellement, le tronçon arrière comprend une cavité épousant le premier bossage de rigidification.

Préférentiellement, la bride de fixation est une bride avant.

Préférentiellement, la bride de fixation est une bride horizontale.

Préférentiellement, la zone plane s'étend depuis l'extrémité avant.

Préférentiellement, le premier bossage de rigidification comprend un premier sommet.

Selon un autre aspect, l'invention propose une structure de véhicule automobile, la structure comprenant un habitacle passager ; une tôle de plancher sous l'habitacle passager, ladite tôle de plancher comprenant un premier bossage de rigidification avec une extrémité avant ; une traverse avec une bride de fixation le long du premier bossage de rigidification; un raidisseur longitudinal le long du premier bossage de rigidification ; **remarquable en ce que** le raidisseur longitudinal comprend un tronçon avant avec au moins un bossage avant s'étendant en avant de l'extrémité avant et étant fixée à la tôle de plancher ; un tronçon arrière avec un bossage arrière le long du premier bossage de rigidification. Cette structure offre un bossage arrière complétant le renfort apporté par le premier bossage de rigidification.

Selon un autre aspect, l'invention propose un plancher de structure de véhicule automobile, le plancher comprenant : une tôle de plancher destiné à délimiter un habitacle passager, ladite tôle de plancher comprenant un premier bossage de rigidification s'étendant longitudinalement ; une traverse avec une bride de fixation longitudinalement au niveau du premier bossage de rigidification ; un raidisseur longitudinal le long du premier bossage de rigidification ; **caractérisé en ce que ;** le raidisseur longitudinal comprend un tronçon avant fixé à la tôle de plancher et comprenant au moins un bossage avant ; un tronçon arrière avec un bossage arrière qui est différent du au moins un bossage avant, et qui s'étend le long du premier bossage de rigidification et de la bride de fixation. Ce plancher optimise la rigidité et la modularité.

Selon un autre aspect, l'invention propose un véhicule automobile comprenant une structure, **remarquable en ce que** la structure est conforme à l'invention.

Préférentiellement, le véhicule automobile comprend une place arrière latérale avec un centre, le raidisseur longitudinal étant transversalement aligné sur ledit centre.

Préférentiellement, le bossage arrière est transversalement aligné sur le centre.

Selon un autre aspect, l'invention propose un véhicule automobile comprenant un plancher ; **remarquable en ce que** le plancher est conforme à l'invention.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 montre une portion de structure de véhicule automobile selon l'invention.
La figure 3 représente un plancher de structure de véhicule automobile selon l'invention.
La figure 4 est une coupe d'une structure de véhicule automobile selon l'invention.
La figure 5 montre une structure de véhicule automobile selon un mode de réalisation de l'invention.
La figure 6 montre une structure de véhicule automobile selon un autre mode de réalisation de l'invention.

Dans la description qui suit, le terme « comprendre » est synonyme de « inclure » et n'est pas limitatif en ce qu'il autorise la présence d'autres éléments dans le véhicule automobile ou la structure auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage de la structure, à moins que le contraire ne soit mentionné explicitement.

Au travers de la description, les différentes figures utilisent les mêmes signes de référence pour désigner des entités identiques ou similaires.

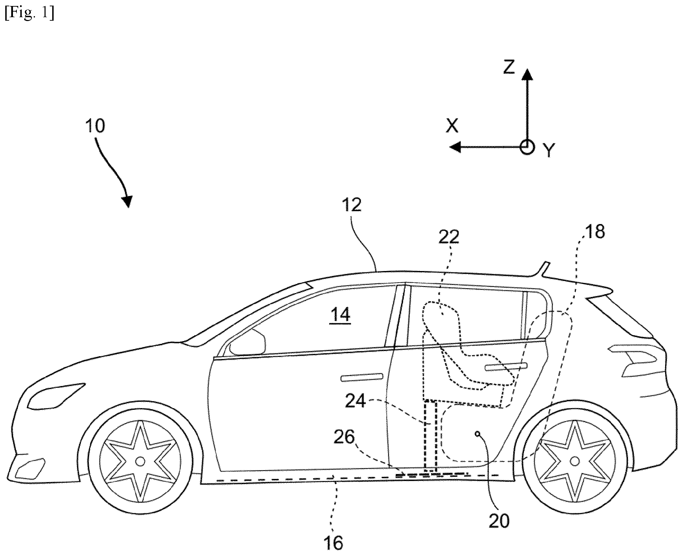

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure 12. La structure 12 forme une caisse extérieure, ou encore une ossature principale du véhicule automobile. La structure 12 délimite différents compartiments du véhicule automobile 10, dont l'habitacle passager 14, le coffre de chargement, le compartiment moteur (non représentés). La structure 12 peut être formée d'un assemblage de tôles embouties et soudées les unes aux autres.

La structure 12 relie différentes parties du véhicule automobile 10 dont les ouvrants. La structure 12 forme un support de montage pour le groupe motopropulseur, les systèmes de suspension, le système de direction, les systèmes de freinage.

La structure 12 comprend une tôle de plancher 16. La tôle de plancher 16 est essentiellement horizontale. Elle matérialise le plancher de l'habitacle passager 14. La tôle de plancher 16 s'étend le long de l'habitacle passager 14. Elle s'étend sensiblement sur toute la largeur de la structure 12 et/ou toute la longueur de l'habitacle passager 14.

Le véhicule automobile 10 comprend au moins une place arrière latérale 18. La place arrière latérale 18 comprend une assise et un dossier. La au moins une place arrière latérale 18 peut être formée par une banquette arrière. La place arrière latérale 18 est une place arrière gauche ou une place arrière droite. Selon la direction transversale, la place arrière latérale 18 comprend un centre 20. Le centre 20 est au milieu latéral.

Un siège enfant 22 est installé sur la place arrière latérale 18. Le siège enfant 22 est par exemple lié à la place arrière latérale 18 par un système d'ancrage à crochet et/ou par une ceinture de sécurité. Le siège enfant 22 est tournée vers l'avant ou vers l'arrière. Afin d'optimiser sa stabilité, le siège enfant 22 comprend une jambe de force 24. En phase de freinage, le siège enfant 22 bascule vers l'avant, si bien que la jambe de force 24 poinçonne la tôle de plancher 16. Cette dernière tend à se déformer. Dans le cas d'un véhicule automobile avec une batterie électrique sous la tôle de plancher 16, cette dernière est susceptible d'atteindre ladite batterie électrique ; et potentiellement de la dégrader.

La structure 12 comprend un raidisseur longitudinal 26. Le raidisseur longitudinal 26 reprend des efforts exercés sur la structure 12. Il la rigidifie. La structure 12 est sous la jambe de force 24. Le raidisseur longitudinal 26 est contre la tôle de plancher 16. Il forme une interface d'appui. Le raidisseur longitudinal 26 est transversalement aligné sur le centre 20 de la place arrière latérale 18. Ainsi, il limite les déformations générées par la jambe de force 24, notamment lors d'une phase de décélération.

Le véhicule automobile peut par exemple être un véhicule automobile particulier.

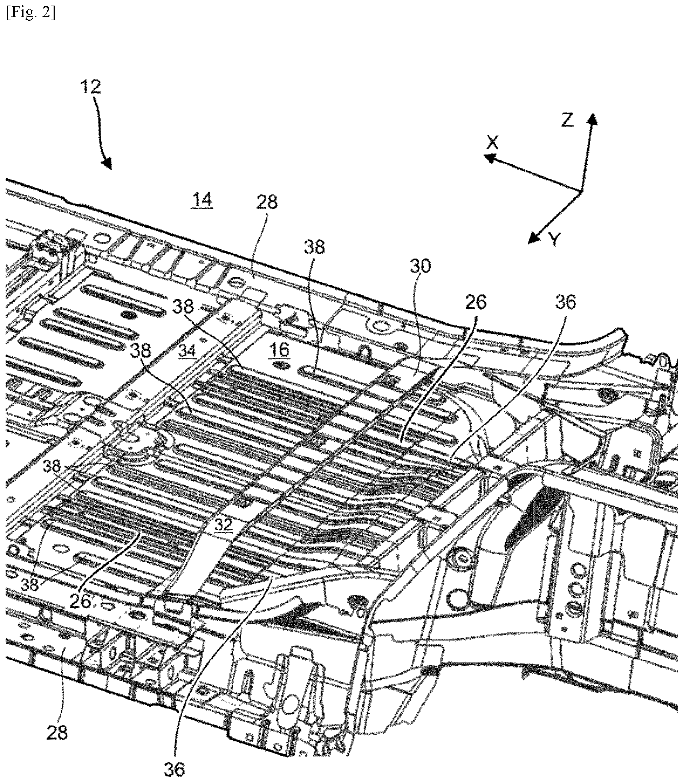

La figure 2 présente une partie de structure 12 de véhicule automobile, selon un mode de réalisation de l'invention. Le véhicule automobile peut correspondre à celui présenté en relation avec la figure 1.

La structure 12 comprend des longerons latéraux 28 bordant la tôle de plancher 16. La structure 12 comprend au moins une traverse 30. La traverse 30 relie les longerons latéraux 28. La traverse 30 est préférentiellement une traverse supérieure, et/ou une traverse arrière 32. Elle est une traverse principale au niveau de l'habitacle passager 14. La traverse arrière 32 est en arrière de la tôle de plancher 16. Elle est sous la place arrière latérale. Elle forme un support de fixation de banquette arrière (non représentée). Elle est couramment désignée en tant que planche à talon.

La structure 12 comprend également une traverse avant 34. La traverse avant 34 est en avant de la traverse arrière 32. Elle est une traverse inférieure. Elle forme un support de fixation pour des sièges avant. La structure 12 comprend au moins un raidisseur longitudinal 26, préférentiellement deux raidisseurs longitudinaux 26, chacun associés à l'une des places arrière latérales (non représentées), et préférentiellement chacun centrés sur l'un des centres des places arrière latérales. Chaque raidisseur longitudinal 26 forme une plaque de renfort.

La tôle de plancher 16 comprend une pluralité de bossages de rigidification. Sous l'habitacle passager 14, ladite tôle de plancher 16 comprend au moins un premier bossage de rigidification 36 et des deuxièmes bossages de rigidification 38 s'étendant longitudinalement. Les bossages sont parallèles. Ils sont des bossages de rigidification longitudinaux. La traverse 30 comporte une bride de fixation longitudinalement au niveau de chaque premier bossage de rigidification 36. La traverse 30 croise les premiers bossages de rigidification 36 et les deuxièmes bossages de rigidification 38.

Chaque raidisseur longitudinal 26 est associé à l'un des premiers bossages de rigidification 36. Chaque raidisseur longitudinal 26 est chaussé sur un des premiers bossages de rigidification 36. Les raidisseurs longitudinaux 26 s'étendent de la traverse avant 34 à la traverse arrière 32.

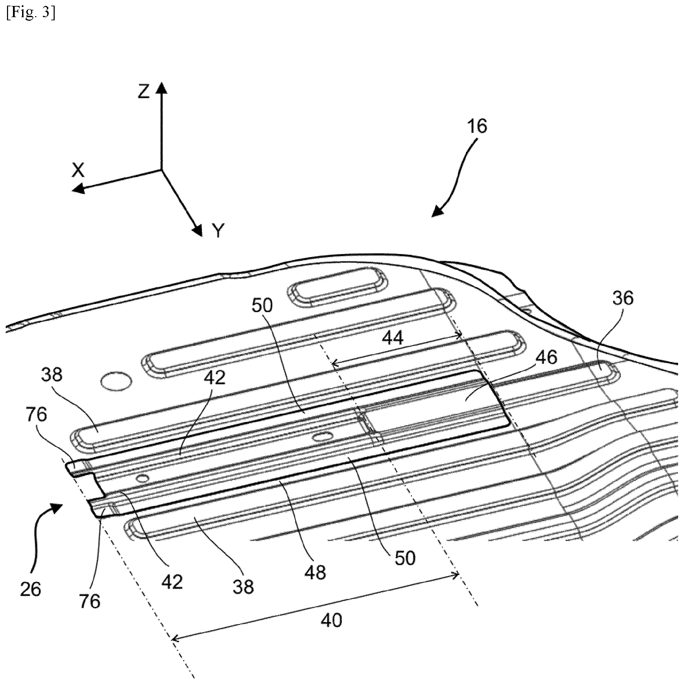

La figure 3 présente un plancher avec une tôle de plancher 16 et un raidisseur longitudinal 26 de structure de véhicule automobile, selon un mode de réalisation de l'invention. Le véhicule automobile peut correspondre à celui présenté en relation avec l'une des figures 1 à 2. La traverse n'est pas représentée par souci de clarté.

La tôle de plancher 16 est généralement plane, et comprend un premier bossage de rigidification 36 ainsi que des deuxièmes bossages de rigidification 38. Le premier bossage de rigidification 36 est continu. Deux deuxièmes bossages de rigidification 38 consécutifs encadrent le raidisseur longitudinal 26. Le raidisseur longitudinal 26 comprend un tronçon avant 40 fixé à la tôle de plancher et comprenant au moins un bossage avant 42 ; préférentiellement deux bossages avant 42. Chaque bossage est en élévation par rapport à sa tôle de référence. Chaque bossage de rigidification comprend une longueur supérieure à la largeur transversale associée.

Le raidisseur longitudinal 26 comprend également un tronçon arrière 44 avec un bossage arrière 46. Le bossage arrière 46 est différent du au moins un bossage avant 42, et qui s'étend le long du premier bossage de rigidification 36 et de la bride de fixation de la traverse. Le tronçon arrière 44 comprend une longueur supérieure ou égale à 5 cm ; préférentiellement, supérieure ou égale à 12 cm. La longueur est une longueur moyenne. Elle est mesurée longitudinalement.

Le premier bossage de rigidification 36 et le raidisseur longitudinal 26 sont superposés. Ils présentent des surfaces de forme complémentaires. Le tronçon arrière 44 est aligné sur le premier bossage de rigidification 36. Le tronçon arrière 44 est parallèle au premier bossage de rigidification 36. Le au moins un bossage avant 42 est plus long que le bossage arrière 46. Le raidisseur longitudinal 26 est transversalement aligné sur le centre de la place arrière latérale de droite (non représentée). Le bossage arrière 46 est transversalement aligné sur le centre.

La tôle de plancher 16 comprend une zone plane 48. La zone plane 48 s'étend transversalement sur toute la largeur du raidisseur longitudinal 26, ou au moins sur toute la largeur du tronçon avant 40. La zone plane 48 s'étend entre deux deuxièmes bossages de rigidification 38 consécutifs. Elle est en avant du premier bossage de rigidification 36. Le tronçon avant 40 est fixé à la zone plane 48, par exemple par des points de soudure. La zone plane 48 s'étend depuis l'extrémité avant du premier bossage de rigidification 36. La zone plane 48 est dans le prolongement avant du premier bossage de rigidification 36.

Le raidisseur longitudinal 26 comprend des lames de fixation 50 s'étendant longitudinalement. Les lames de fixation 50 s'étendent sur toute la longueur du raidisseur longitudinal 26. Les lames de fixation 50 s'étendent dans la zone plane 48.

Le raidisseur longitudinal 26 comprend en outre des languettes avant 76. Les languettes avant 76 sont destinées à être fixées à une autre traverse. Ainsi, le raidisseur longitudinal 26 relie longitudinalement les traverses de la structure 12, ce qui optimise la rigidité, la masse et le nombre d'éléments.

La présente figure est décrite en relation avec l'un des côtés de la structure. Toutefois la présente description s'applique également au côté opposé.

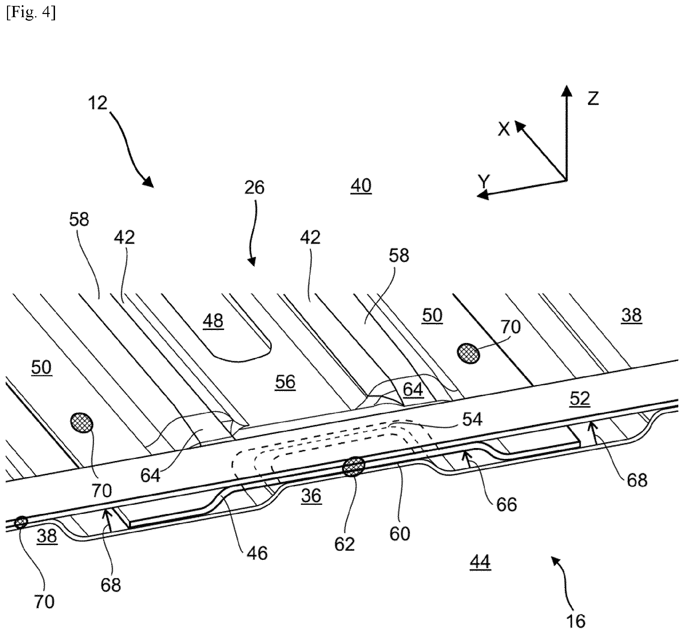

La figure 4 est une coupe de plancher de structure 12 de véhicule automobile, selon un mode de réalisation de l'invention. Le véhicule automobile peut correspondre à celui présenté en relation avec l'une des figures 1 à 3.

La coupe traverse la tôle de plancher 16, le raidisseur longitudinal 26 et la bride de fixation 52 de la traverse. La bride de fixation 52 est une bride de fixation horizontale. Elle est une bride avant ; en ce sens qu'elle prolonge vers l'avant la traverse. La coupe traverse plus précisément le premier bossage de rigidification 36, deux deuxièmes bossages de rigidification 38 adjacents et le bossage arrière 46.

Le premier bossage de rigidification 36 comprend une extrémité avant 54. L'extrémité avant 54 délimite longitudinalement le premier bossage de rigidification 36. L'extrémité avant 54 est placée longitudinalement au niveau du bossage arrière 46. L'extrémité avant 54 est dans le bossage arrière. Le tronçon arrière 44 est verticalement entre la bride de fixation et la tôle de plancher. Le tronçon avant 40 est en avant de l'extrémité avant 54.

Dans le présent mode de réalisation, le raidisseur longitudinal 26 comprend deux bossages avant 42. La combinaison des bossages avant 42 présente un premier volume interne. Ce premier volume interne est la somme des volumes internes de chaque bossage avant 42. Le bossage arrière 46 comprend un deuxième volume interne qui est supérieur au premier volume interne. Cet aspect permet d'augmenter la rigidité du raidisseur longitudinal 26.

Les bossages avant 42 sont séparés par une gorge longitudinale 56. La gorge longitudinale 56 est contre la tôle de plancher 16, notamment contre la zone plane 48. La gorge longitudinale 56 sépare les deux bossages avant 42. Elle contribue à la rigidité.

Chaque bossage avant 42 est plus haut que le bossage arrière 46. Transversalement, le bossage arrière 46 est plus large que le premier bossage de rigidification 36 et/ou que chaque bossage avant 42. Ces aspects optimisent la compacité et la raideur apportée au raidisseur longitudinal 26. Chaque bossage avant 42 comprend un sommet avant 58. Le bossage arrière 46 comprend un sommet arrière 60 plus bas que chaque sommet avant 58. Chaque sommet avant 58 et le sommet arrière 60 comportent chacun une surface plane, par exemple horizontale.

Le bossage arrière 46, le premier bossage de rigidification 36 et la bride de fixation 52 forment un empilement. Ces éléments sont l'un contre l'autre. Le raidisseur longitudinal 26, notamment le bossage arrière 46, est intercalé entre le premier bossage de rigidification 36 et la bride de fixation 52. L'empilement est fixé par un point de soudure trois épaisseurs 62. Le sommet arrière 60 est fixé à la bride de fixation 52.

Le raidisseur longitudinal 26 comprend au moins une rampe de jonction 64 qui relie longitudinalement le au moins un bossage avant 42 au bossage arrière 46. La rampe de jonction 64 monte vers l'avant. Elle et inclinée par rapport à la direction horizontale. La rampe de jonction 64 est inclinée par rapport à la tôle de plancher 16, préférentiellement d'un angle d'inclinaison compris entre 5° et 45°, plus préférentiellement compris entre 10° et 30°.

Le tronçon arrière 44 est verticalement en regard du premier bossage de rigidification 36. Le tronçon arrière 44, notamment le bossage arrière 46, définit une cavité logeant, préférentiellement épousant, le premier bossage de rigidification 36 afin de permettre un contact vertical. Le bossage arrière 46 est transversalement plus large que le premier bossage de rigidification 36. Dans sa cavité, le bossage arrière 46 présente des jeux latéraux de part et d'autre du premier bossage de rigidification 36. Ces particularités augmentent la rigidité.

La tôle du raidisseur longitudinal 26 est plus épaisse que la tôle de plancher 16. La bride de fixation 52 est fixée aux deuxièmes bossages de rigidification 38 via des deuxièmes points de soudure 70. D'autres deuxièmes points de soudure 70 fixent les lames de fixation 50 à la zone plane 48.

Chaque premier bossage de rigidification 36 comprend une première hauteur 66. Les deuxièmes bossages de rigidification 38 comprennent une deuxième hauteur 68. La deuxième hauteur 68 est supérieure à la première hauteur 66. Ces bossages comprennent des profils longitudinaux différents. La différence de hauteur correspond à l'épaisseur de la tôle du raidisseur longitudinal 26. Par conséquent, les deuxièmes bossages de rigidification 38, ainsi que le bossage arrière 46 en appui sur le premier bossage de rigidification 36, offrent une surface plane pour l'appui et la fixation de la bride de fixation 52. La fixation est plus résistante.

Selon une alternative de l'invention, le premier bossage fait saillie vers le bas, et le raidisseur longitudinal est au-dessus de la tôle de plancher.

Selon une alternative de l'invention, la bride de fixation est une bride arrière.

Selon une alternative de l'invention, le raidisseur longitudinal comprend une marche de jonction qui relie le au moins un bossage avant au bossage arrière.

Selon une alternative de l'invention, le raidisseur longitudinal est sous la tôle de plancher.

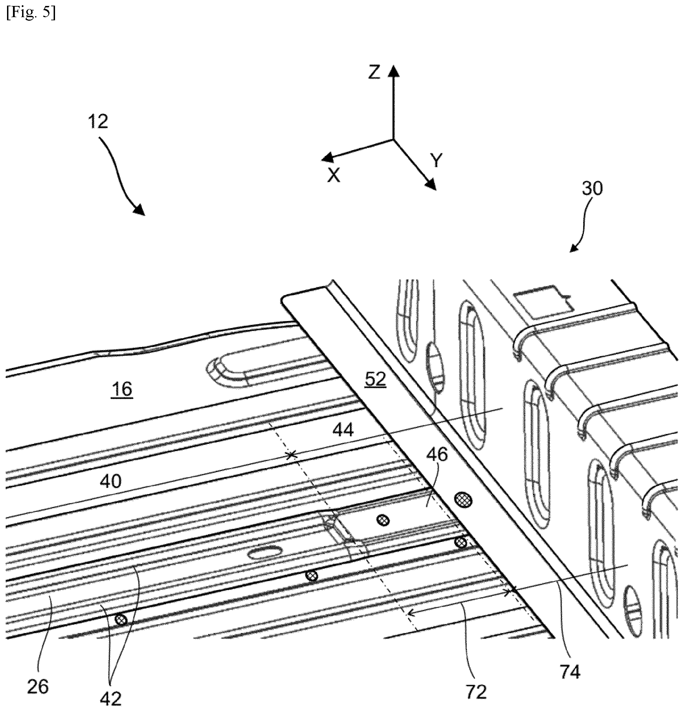

La figure 5 présente une partie de structure 12 de véhicule automobile, selon un mode de réalisation de l'invention. Le véhicule automobile peut correspondre à celui présenté en relation avec l'une des figures 1 à 4.

La structure 12 comprend une tôle de plancher 16 avec un premier bossage de rigidification (non visible) s'étendant longitudinalement ; une traverse 30 avec une bride de fixation 52 longitudinalement au niveau du premier bossage de rigidification ; un raidisseur longitudinal 26 le long du premier bossage de rigidification. Le raidisseur longitudinal 26 comprend un tronçon avant 40 fixé à la tôle de plancher 16 et comprenant au moins un bossage avant 42 ; un tronçon arrière 44 avec un bossage arrière 46 qui est différent du au moins un bossage avant 42, et qui s'étend le long du premier bossage de rigidification et de la bride de fixation 52. Le tronçon arrière 44 comprend une moitié avant 72 et une moitié arrière 74. La bride de fixation 52 de la traverse 30 est ici fixée à la moitié arrière 74.

Le bossage arrière 46, le premier bossage de rigidification et la bride de fixation 52 forment un empilement ; préférentiellement, l'empilement est fixé par un point de soudure triple épaisseur.

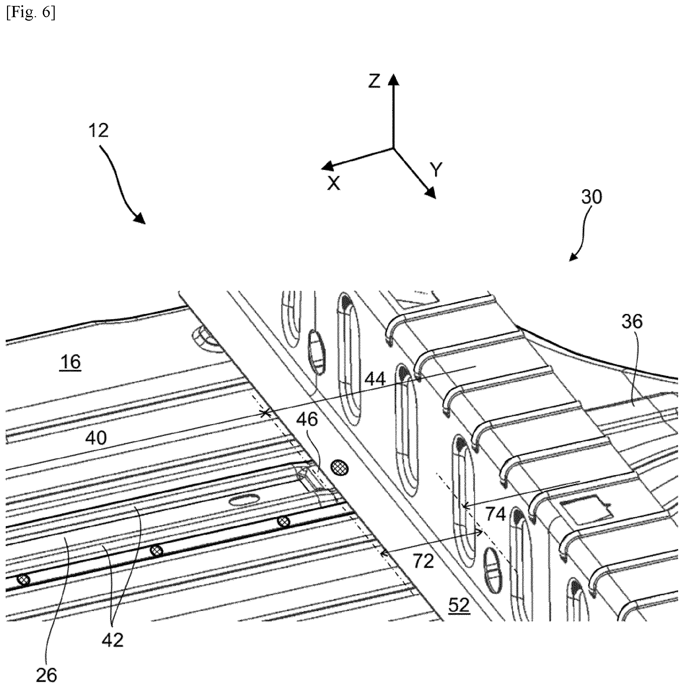

La figure 6 présente une partie de structure 12 de véhicule automobile, selon un mode de réalisation de l'invention. Le véhicule automobile peut correspondre à celui présenté en relation avec l'une des figures 1 à 4.

La structure 12 comprend une tôle de plancher 16 avec un premier bossage de rigidification 36 s'étendant longitudinalement ; une traverse 30 avec une bride de fixation 52 longitudinalement au niveau du premier bossage de rigidification 36 ; un raidisseur longitudinal 26 le long du premier bossage de rigidification 36. Le raidisseur longitudinal 26 comprend un tronçon avant 40 fixé à la tôle de plancher 16 et comprenant au moins un bossage avant 42 ; un tronçon arrière 44 avec un bossage arrière 46 qui est différent du au moins un bossage avant 42, et qui s'étend le long du premier bossage de rigidification 36 et de la bride de fixation 52. Le tronçon arrière 44 comprend une moitié avant 72 et une moitié arrière 74, la bride de fixation de la traverse est ici fixée à la moitié avant 72.

Donc la traverse 30, notamment sa bride de fixation 52, est indistinctement reliée à la moitié avant ou à la moitié avant du tronçon arrière 44. Dès lors, des mêmes modèles de tôle de plancher 16, de traverse 30 et de raidisseur longitudinal 26 peuvent être employés pour réaliser différents modèles de voitures. En particulier, l'invention permet une variation de longueur de plateforme et d'habitacle passager. L'invention apporte un gain de modularité. Elle permet de réaliser plusieurs empattements avec des mêmes entités de la structure.

La tôle de plancher 16, la traverse 30 et le raidisseur longitudinal 26 sont métalliques. Ils sont produits à partir de tôles découpées et embouties. Ces tôles sont ensuite soudées ou collées afin de matérialiser la structure 12. Les tôles sont en acier. Selon une alternative de l'invention, elles sont en aluminium. D'autres alliages sont considérés.

L'invention comprend la combinaison de tous les modes de réalisation illustrés par toutes les figures.

Les figures 2 à 6 sont des vues isométriques. Elles respectent chacune une échelle spécifique, des angles réels et des proportions réelles.

## Revendications

1. Structure (12) de véhicule automobile (10), la structure (12) comprenant un habitacle passager (14) ; une tôle de plancher (16) sous l'habitacle passager (14), ladite tôle de plancher (16) comprend un premier bossage de rigidification (36) s'étendant longitudinalement ; une traverse (30) avec une bride de fixation (52) longitudinalement au niveau du premier bossage de rigidification (36) ; un raidisseur longitudinal (26) le long du premier bossage de rigidification (36) ; **caractérisée en ce que** le raidisseur longitudinal (26) comprend un tronçon avant (40) fixé à la tôle de plancher (16) et comprenant au moins un bossage avant (42) ; un tronçon arrière (44) avec un bossage arrière (46) qui est différent du au moins un bossage avant (42), et qui s'étend le long du premier bossage de rigidification (36) et de la bride de fixation (52).

2. Structure (12) selon la revendication 1, **caractérisée en ce que** le premier bossage de rigidification (36) comprend une extrémité avant (54) le long du bossage arrière (46) ; préférentiellement, le tronçon arrière (44) est verticalement entre la bride de fixation (52) et la tôle de plancher (16).

3. Structure (12) selon l'une des revendications 1 à 2, **caractérisée en ce que** le bossage arrière (46) est plus large que le premier bossage de rigidification (36) ; et/ou le bossage arrière (46) est plus large que chaque bossage avant (42).

4. Structure (12) selon l'une des revendications 1 à 3, **caractérisée en ce que** le bossage avant (42) comprend un sommet avant (58), le bossage arrière (46) comprend un sommet arrière (60) sous le sommet avant (58) ; préférentiellement, le sommet arrière (60) est fixé à la bride de fixation (52).

5. Structure (12) selon l'une des revendications 1 à 4, **caractérisée en ce que** la tôle de plancher (16) comprend deux deuxièmes bossages de rigidification (38), une zone plane (48) entre les deuxièmes bossages et en avant du premier bossage de rigidification (36), le tronçon avant (40) étant fixé à ladite zone plane (48) ; préférentiellement, le premier bossage de rigidification (36) comprend une première hauteur (66), les deuxièmes bossages de rigidification (38) comprennent une deuxième hauteur (68) supérieure à la première hauteur (66).

6. Structure (12) selon l'une des revendications 1 à 5, **caractérisée en ce que** le raidisseur longitudinal (26) comprend une rampe de jonction (64) qui relie longitudinalement le au moins un bossage avant (42) au bossage arrière (46) et qui est inclinée par rapport à la tôle de plancher (16).

7. Structure (12) selon l'une des revendications 1 à 6, **caractérisée en ce que** le au moins un bossage avant (42) comprend un premier volume interne, et le bossage arrière (46) comprend un deuxième volume interne qui est supérieur au premier volume interne ; préférentiellement, le au moins un bossage avant (42) comprend deux bossages avant (42), et le raidisseur longitudinal (26) comprend une gorge longitudinale (56) entre les deux bossages avant (42).

8. Structure (12) selon l'une des revendications 1 à 7, **caractérisée en ce que** le bossage arrière (46), le premier bossage de rigidification (36) et la bride de fixation (52) forment un empilement ; préférentiellement, l'empilement est fixé par un point de soudure trois épaisseurs (62).

9. Structure (12) selon l'une des revendications 1 à 8, **caractérisée en ce que** le tronçon arrière (44) comprend une moitié avant (72) et une moitié arrière (74), la bride de fixation (52) de la traverse (30) est fixée à la moitié arrière (74) ou à la moitié avant (72).

10. Véhicule automobile (10) comprenant une structure (12), **caractérisé en ce que** la structure (12) est conforme à l'une des revendications 1 à 9 ; préférentiellement, le véhicule automobile (10) comprend une place arrière latérale (18) avec un centre (20), le raidisseur longitudinal (26) étant transversalement aligné sur ledit centre (20).
